# EUROPEAN PATENT SPECIFICATION

(11) **EP 1 121 920 B1**
(45) Date of publication and mention of the grant of the patent: **29.10.2008**
(21) Application number: 01500019.3
(22) Date of filing: 18.01.2001
(51) Int. Cl.: A61G 3/06

(54) **Retractable ramp suitable for motor vehicles**
Zurückziehbare Rampe für Motorfahrzeuge
Rampe rétractable pour véhicules à moteurs

(30) Priority: 31.01.2000 ES 200000187
(43) Date of publication of application: 08.08.2001
(73) Proprietor: MASATS S.A., Sant Salvador de Guardiola Barcelona (ES)
(72) Inventor: Alapont Masats, Salvador, 08253 Sant Salvador de Guardiola (ES)
(74) Representative: SUGRANES - VERDONCES - FERREGÜELA

(56) References cited:
- EP-A- 0 217 265
- EP-A- 0 931 532
- DE-A- 4 134 559
- DE-A- 4 422 598
- DE-A- 10 043 561
- US-A- 4 827 548
- US-A- 5 357 869
- US-A- 5 775 232
- US-A- 5 832 555

## Description

### Technical sector of the invention.-

The invention refers to a retractable ramp that in general is suitable for fixing to any type of motor vehicle, and more particularly to those vehicles intended for transporting disabled people who require the help of a wheelchair in order to get about.

### Background to the invention.-

Various embodiments of retractable ramps are known, of the kind which make both a horizontal positioning movement and a vertical positioning movement in order to attain a specific position.

This type of ramp comprises coupling means for coupling the platform to the vehicle chassis, as well as horizontal movement means and vertical movement means.

The horizontal movement means allows the ramp, which in non-operative position is to be found underneath the vehicle, to move horizontally until it reaches a position which subsequently allows it to be moved vertically, that is to say, the horizontal movement can not be concluded before the ramp has completely exited from the vehicle chassis, since the latter represents an obstacle in the later vertical movement of the ramp.

The vertical movement means allows the ramp to reach the desired height and, in some of the cases, the desired inclination.

In the known embodiments of the kind previously described, the horizontal and vertical positioning movements are made completely independently. In most cases the horizontal positioning of the platform is done first and the vertical positioning of the same is done later.

This type of retractable ramp has a drawback in the lengthy time required to reach the operative position starting from rest position, which is to be found underneath the vehicle chassis.

Of course, the fact that two independent movements have to be made means that the structure of the ramps previously described should have at least one independent mechanism to make each of said two movements, whereby the space needed to house said mechanisms is also important.

Document EP0931532 describes a retractable ramp according to the preamble of claim 1. Said ramp allows the platform to move from a rest position to an operative position in a single movement. An alternative to the described ramp is presented below.

### Explanation of the invention.-

With the aim of offering a solution to the problems previously described, deriving from the time required by the known platforms to reach an operative position and from the considerable space taken up by each of the independent movement mechanisms, a retractable ramp suitable for motor vehicles of a new structure and function has been created.

The retractable ramp suitable for motor vehicles according to the invention comprises a platform adapted to make a horizontal positioning movement and a vertical positioning movement in order to reach a desired height with a specific incline.

The retractable ramp of the invention further comprises coupling means for coupling the platform to the vehicle chassis, horizontal movement means and vertical movement means to transport the platform from a rest position to an operative position and vice-versa.

According to the invention, said horizontal movement means and said vertical movement means of the platform are joined by coupling means, all of which is adapted in such a way that the horizontal and vertical positioning movements are made without interruption, that is to say, the platform moves from a rest position to an operative position in a single movement.

In accordance with the present invention, the coupling means between the horizontal positioning means and the vertical positioning means are constituted by at least one articulated assembly consisting of a double hinge joined at each of its ends to a corresponding articulation point, of which the first is articulated to the platform and the second to the movable structure of the horizontal movement means.

According to the invention, the retractable ramp is characterized in that the vertical movement means comprises an upper movable structure and at least one shaft which extends from an intermediate articulated point of the side surface of the double hinge to said upper movable structure, to which the shaft is joined by means of the articulation point.

The intermediate articulation point of the side surface of the double hinge joins the vertical movement means with the horizontal movement means.

Preferably, in the highest operative position of the platform, the angle which forms the hinge of each articulated assembly with the horizontal over which is situated the lower movable structure, is greater than 90 degrees.

The upper movable structure may comprise a stop which limits the horizontal movement of the movable structure itself and of the shaft.

Preferably, the horizontal movement means comprises, at least, one motor, a gear, a first driven sprocket wheel and a second driven sprocket wheel integrally joined to a spindle, and a cog pulley, a cog belt and a second cog pulley integrally joined to a spindle, all of which is adapted so that the spindles, as a consequence of their peculiar shape, transform their rotation movement into a longitudinal movement by means of the nuts which are to be found so moving the lower movable structure.

The described features of the retractable ramp for vehicles object of the invention, provide a solution to the drawbacks previously described which known embodiments of retractable ramps present.

### Brief description of the drawings.-

On the sheets of drawings of the present account the retractable ramp suitable for motor vehicles object of the present invention is illustrated. In said drawings,
Fig. 1 is a side view of the ramp, object of the present invention, with the platform in the non-operative position;
Fig. 2 shows a side view of the ramp of the present invention with the platform extended;
Fig. 3 is a plan view of the retractable ramp, object of the present invention;

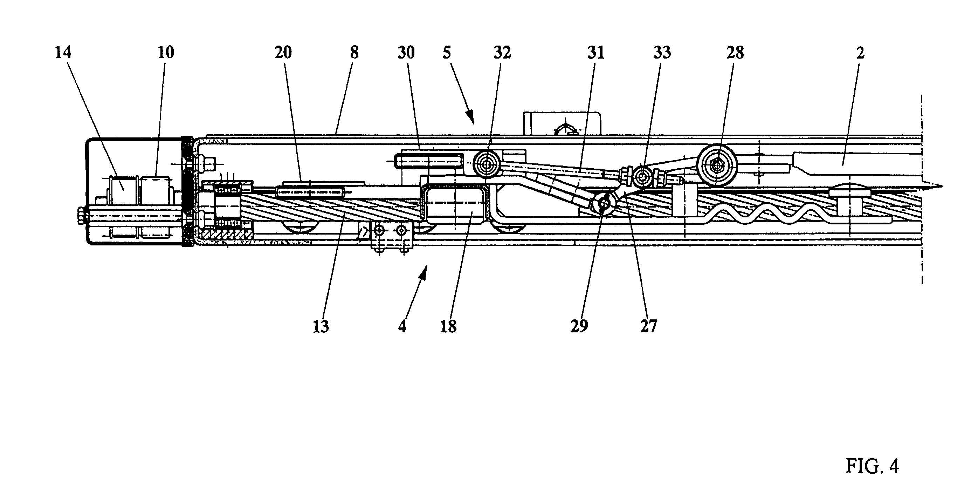

Fig. 4 is an enlarged detailed view, in accordance with IV of Fig. 1;
Fig. 5 is another enlarged detailed view, in accordance with V of Fig. 2 ; and
Figs. 6, 7, 8, 9 and 10 are diagrammatic views of the various positions of the ramp.

### Detailed description of the drawings.-

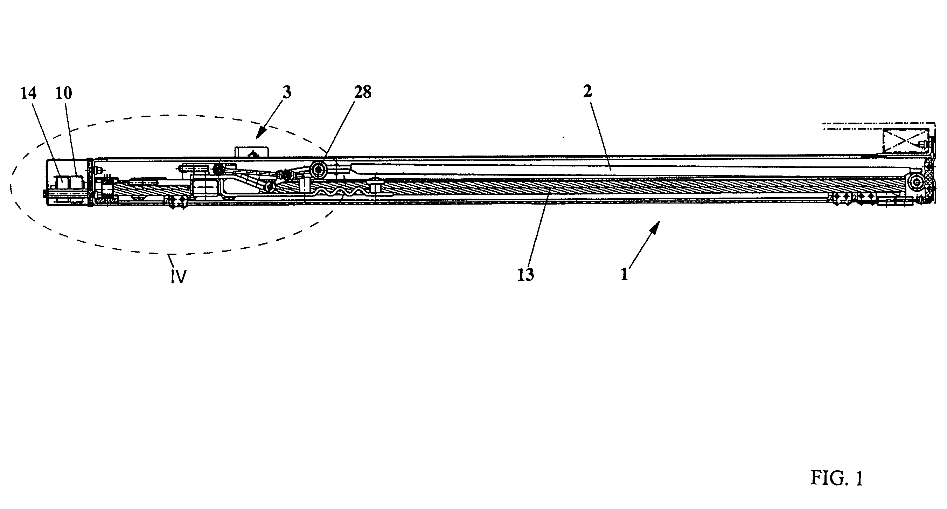

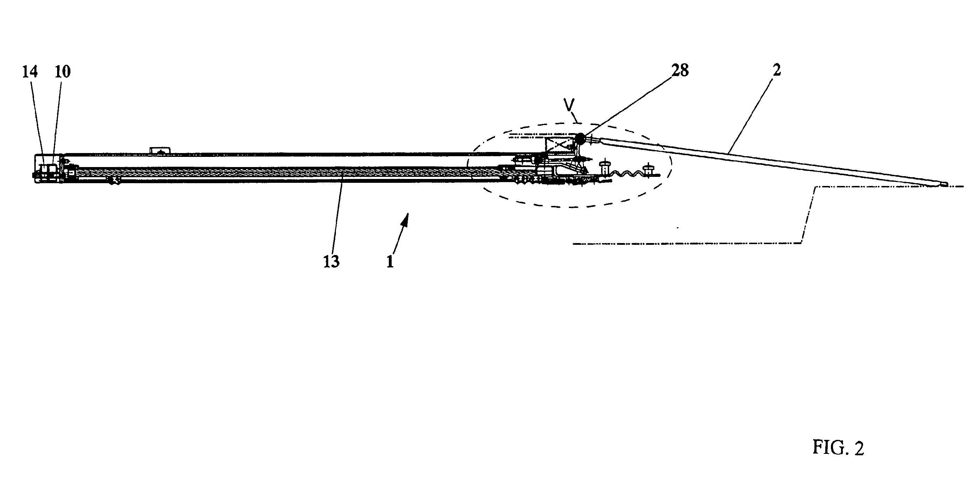

Figs. 1 and 2 show the retractable ramp 1, which as an embodiment example is described in very general views, with the platform 2 in its rest position and in its operative position, respectively.

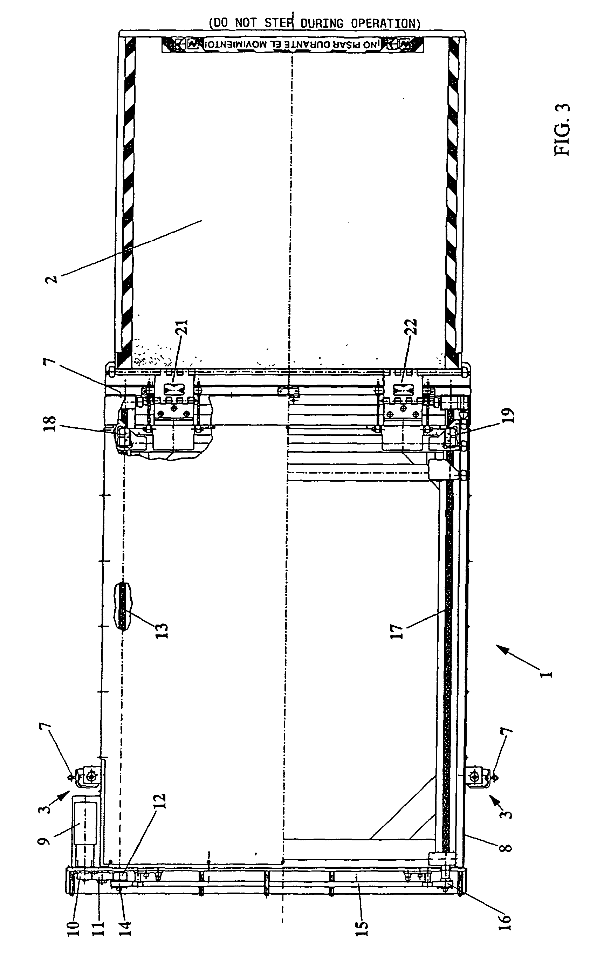

In Fig. 3 the following can all be seen: the coupling means 3 of the ramp to the chassis of the vehicle, the horizontal movement means 4 of platform 2, the vertical movement means 5 of platform 2 and the coupling means between the horizontal movement means 4 and the vertical movement means 5 of platform 2.

The coupling means 3 of the platform to the chassis of the vehicle consist of a plurality of anchoring elements 7, arranged on both sides on the rear part of the support structure 8 of the platform, horizontally along the frontal part of said support structure 8.

The horizontal movement means 4 of the platform comprises a motor 9, to whose shaft a gear 10 is integrally linked and which engages a first driven sprocket wheel 11, which in turn engages a second driven sprocket wheel 12, which is integrally joined to spindle 13.

A cog pulley 14, also integrally joined to spindle 13, which pulls a cog belt 15, makes another cog pulley 16 turn at its opposite end, which is integrally joined to a second spindle 17.

The spindles 13 and 17 have some known special features, by means of which they are capable of transforming their rotation movement into a longitudinal movement applied to two nuts 18, 19 arranged at the respective ends of the spindles 13, 17.

The nuts 18, 19 are integrally joined to each other by means of the lower movable structure 20.

The coupling means between the horizontal movement means 4 and the vertical movement means 5 of the platform 2 consist of two double hinges 21, 22 joined by their respective sides 27 to a corresponding articulation point 28, 29 of platform 2 and of the lower movable structure 20 respectively, and by an articulation point 33 intermediate to shaft 31.

In Fig. 1 it can be observed that the lower movable structure 20 is joined to platform 2 by means of a double hinge 21, 22 situated at each end of platform 2. The total length of each one of the hinges 21, 22, is equal to the vertical distance existing between said movable structure 20 and the vehicle floor.

Each hinge 21, 22 comprises two articulation points, a first articulation point 28 which joins it to the platform 2, and another articulation point 29, which joins it to the lower movable structure 20.

The vertical movement means 5 of the platform are formed by an upper movable structure 30 and by two shafts 31 for each double hinge 21, 22. Said shafts 31 are situated at each of the sides of the double hinge 21, 22.

Each of the shafts 31 is joined by one of its ends to the upper movable structure 30, by means of articulation point 32, and at the other end to an intermediate point of the side surface 27 of each of the hinges 21, 22 by means of articulation point 33.

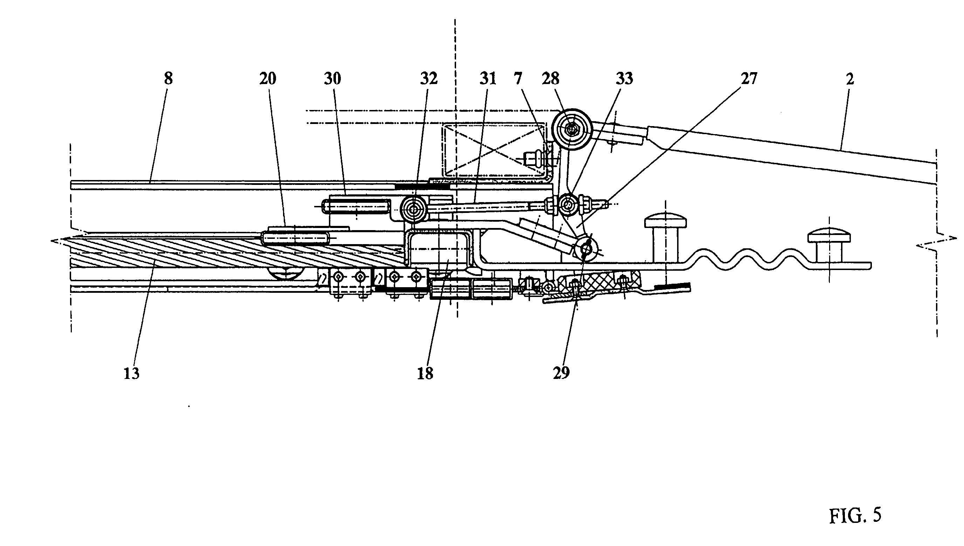

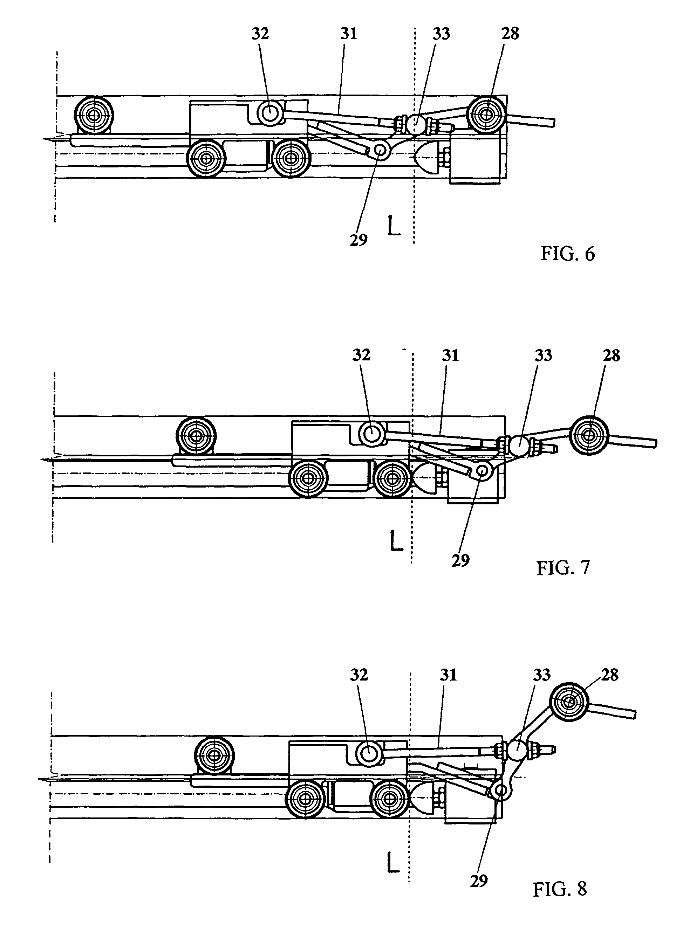

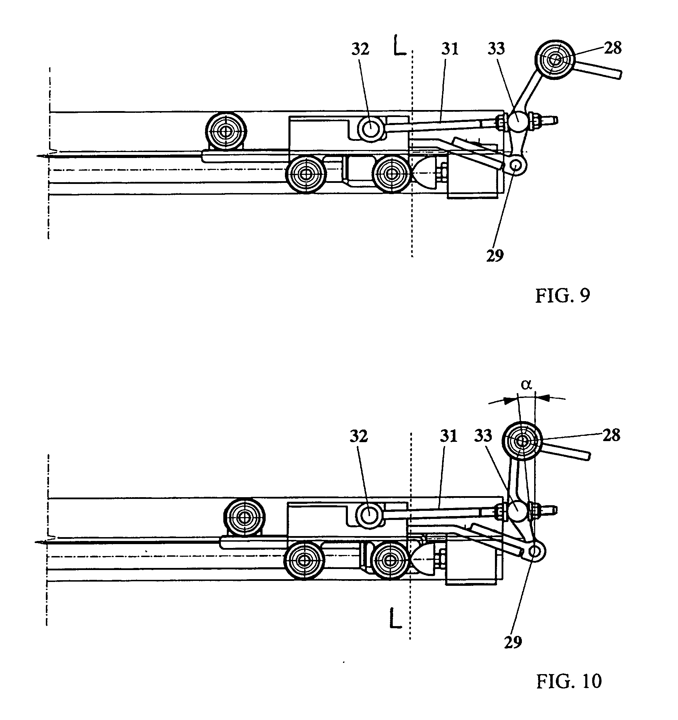

During the movement of the ramp from rest position in order to reach operative position, motor 9 makes spindles 13, 17 rotate, which in turn move the lower movable structure 20, which pushes the double hinges 21, 22 and, in turn, platform 2. The movement of the movable structure 20 and of the double hinges 21, 22 drags the movable structure 30 by means of shaft 31. When the upper movable structure 30 reaches its maximum horizontal movement position, shown by the discontinuous vertical line L in Figures 6 to 10, the lower movable structure 20 continues advancing and continues pushing hinges 21 and 22, which on not being able to advance because of the fact that articulation point 33 is fixed by the effect of shaft 31, starts a rotation movement on said articulation point 33 which forces articulation point 28 to move backwards and upwards until reaching the position shown in Fig. 5. As a consequence of this movement, platform 2 also moves backwards until it reaches the operative position with a certain height and specific incline, as is shown in Fig. 5.

In said Fig. 5 it can be seen that in the operative position of the retractable ramp, the hinges 21, 22 remain at a position in which the articulation point 28 is further behind than articulation point 29, in order to ensure that the weight of platform 2 overloads articulation 29, forcing platform 2 to go back to its horizontal position.

Figs. 6, 7, 8, 9 and 10 show a sequence of consecutive positions of the movement mechanisms of the ramp from its rest position to its operative position.

## Claims

1. Retractable ramp (1) suitable for motor vehicles, comprising a platform (2) adapted to make a horizontal positioning movement and a vertical positioning movement in order to reach a desired height and with a specific incline, further comprising coupling means (3) for coupling the ramp to the vehicle chassis, horizontal movement means (4) of the platform (2) and vertical movement means (5) of the platform (2), said horizontal movement means (4) of the platform and said vertical movement means (5) of the platform being joined by way of coupling means which are constituted by at least one articulated assembly unit consisting of a double hinge (21, 22), joined at each of its ends to a corresponding articulation point (28, 29), of which the first is articulated to the platform (2) and the second to a movable structure (20) of the horizontal movement means (4), all being adapted so that the horizontal and vertical positioning movements are made without interruption, that is to say, platform (2) moves from a rest position to an operative position in a single movement, **characterized in that** the vertical movement means (5) comprise an upper movable structure (30) and at least one shaft (31) which extends from an intermediate articulated point (33) of a side surface (27) of the double hinge (21, 22) to said upper movable structure (30), to which the shaft (31) is joined by means of an articulation point (32).

2. Retractable ramp (1) suitable for motor vehicles in accordance with claim 1 , **characterized in that**, in the platform's highest operative position, the angle (α) which forms the double hinge (21) of each articulated assembly with the horizontal over which is situated the movable structure (20) is greater than 90 degrees.

3. Retractable ramp suitable for motor vehicles according to any one of claims 1 to 2, **characterized in that** the upper movable structure (30) includes a stop which limits the horizontal movement of the movable structure (30) itself and of the shaft (31).

4. Retractable ramp suitable for motor vehicles according to any one of claims 1 to 3, **characterized in that** the horizontal movement means (4) comprise at least one motor (9), a gear (10), a first driven sprocket wheel (11) and a second driven sprocket wheel (12) integrally joined to a first spindle (13), and a cog pulley (14), a cog belt (15) and a second cog pulley (16) integrally joined to a second spindle (17), all being adapted so that the spindles (13, 17), as a consequence of their shape, transform their rotation movement into a longitudinal movement by means of nuts (18, 19) for moving the lower movable structure (20).

## Patentansprüche

1. Für Kraftfahrzeuge geeignete einfahrbare Rampe (1), umfassend eine Plattform (2), die angepasst ist, um eine horizontale Positionierungsbewegung und eine vertikale Positionierungsbewegung durchzuführen, um eine gewünschte Höhe zu erreichen und mit einer spezifischen Neigung, weiterhin umfassend Kupplungsmittel (3) zur Kupplung der Rampe mit dem Fahrzeuggestell, horizontale Bewegungsmittel (4) der Plattform (2) und vertikale Bewegungsmittel (5) der Plattform (2), wobei die genannten horizontalen Bewegungsmittel (4) der Plattform und die genannten vertikalen Bewegungsmittel (5) der Plattform durch Kupplungsmittel verbunden sind, welche durch zumindest ein gelenkiges Normbauteil aufgebaut sind, das aus einem Doppelscharnier (21, 22) besteht, das an jedem seiner Enden mit einem entsprechenden Gelenkpunkt (28, 29) verbunden ist, von welchen der Erste mit der Plattform (2) gelenkig verbunden ist, und der Zweite mit einer beweglichen Struktur (20) der horizontalen Bewegungsmittel (4), wobei alle derart angepasst sind, dass die horizontalen und vertikalen Positionierungsbewegungen ohne Unterbrechung durchgeführt werden, d.h., die Plattform (2) bewegt sich von einer Ruheposition zu einer Arbeitsposition in einer einzigen Bewegung, **dadurch gekennzeichnet, dass** die vertikalen Bewegungsmittel (5) eine obere bewegliche Struktur (30) und zumindest eine Welle (31) umfassen, welche sich von einem unmittelbaren gelenkigen Punkt (33) einer Seitenfläche (27) des Doppelscharniers (21, 22) zu der genannten oberen beweglichen Struktur (30) erstreckt, mit welcher die Welle (31) mittels eines Gelenkpunktes (32) verbunden ist.

2. Für Kraftfahrzeuge geeignete einfahrbare Rampe (1) gemäß Anspruch 1, **dadurch gekennzeichnet, dass** in der höchsten Arbeitsposition der Plattform, der Winkel (α), welchen das Doppelscharnier (21) jedes gelenkigen Bauteils mit der Horizontalen bildet, über welcher die bewegliche Struktur (20) gelegen ist, größer als 90 Grad ist.

3. Für Kraftfahrzeuge geeignete einfahrbare Rampe gemäß einem der Ansprüche 1 bis 2, **dadurch gekennzeichnet, dass** die obere bewegliche Struktur (30) einen Anschlag beinhaltet, welcher die horizontale Bewegung der beweglichen Struktur (30) selbst und der Welle (31) beschränkt.

4. Für Kraftfahrzeuge geeignete einfahrbare Rampe gemäß einem der Ansprüche 1 bis 3, **dadurch gekennzeichnet, dass** die horizontalen Bewegungsmittel (4) zumindest einen Motor (9), ein Zahnradgetriebe (10), ein erstes angetriebenes Zahnrad (11) und ein zweites angetriebenes Zahnrad (12) umfassen, das fest mit einer ersten Spindel (13) verbunden ist, und eine Zahnrolle (14), ein Zahnriehmen (15) und eine zweite Zahnrolle (16), die fest mit einer zweiten Spindel (17) verbunden ist, wobei alle derart angepasst sind, dass die Spindeln (13, 17) aufgrund ihrer Form ihre Rotationsbewegung mittels Muttern (18, 19) in eine Längsbewegung zum Bewegen der unteren beweglichen Struktur (20) umsetzen.

## Revendications

1. Rampe (1) rétractable apte pour véhicules à moteur comprenant une plateforme (2) adaptée pour réaliser un mouvement de positionnement horizontal et un mouvement de positionnement vertical afin d'atteindre une hauteur désirée et avec une inclinaison spécifique, comprenant de plus des moyens de couplage (3) pour coupler la rampe au châssis du véhicule, des moyens de mouvement horizontal (4) de la plateforme (2) et des moyens de mouvement vertical (5) de la plateforme (2), lesdits moyens de mouvement horizontal (4) de la plateforme et lesdits moyens de mouvement vertical (5) de la plateforme étant unis grâce à des moyens de couplage constitués d'au moins une unité d'assemblage articulée consistant en une double charnière (21, 22), unie par chacune de ses extrémités à un point d'articulation (28, 29) correspondant, dont le premier est articulé à la plateforme (2) et le second à une structure amovible (20) des moyens de mouvement horizontal (4), tous étant adaptés afin que les mouvements de positionnement horizontal et vertical s'effectuent sans interruption, c'est-à-dire, que la plateforme (2) se déplace d'une position de repos à une position opérationnelle en un seul mouvement, **caractérisée en ce que** les moyens de mouvement vertical (5) comprennent une structure supérieure amovible (30) et au moins une tige (31) s'étendant d'un point d'articulation intermédiaire (33) d'une surface latérale (27) de la double charnière (21, 22) jusqu'á ladite structure supérieure amovible (30), à laquelle la tige (31) est unie au moyen d'un point d'articulation (32).

2. Rampe (1) rétractable apte pour véhicules à moteur selon la revendication 1, **caractérisée en ce que** dans la position opérationnelle la plus élevée de la plateforme, l'angle (α) formé par la double charnière (21) de chaque assemblage avec l'horizontal au dessus de laquelle est située la structure amovible (20) est supérieur à 90 degrés.

3. Rampe rétractable apte pour véhicules à moteur selon l'une quelconque des revendications 1 à 2, **caractérisée en ce que** la structure supérieure amovible (30) comprend une butée qui limite le mouvement horizontal de la structure supérieure amovible (30) elle-même et de la tige (31).

4. Rampe rétractable apte pour véhicules à moteur selon l'une quelconque des revendications 1 à 3, **caractérisée en ce que** les moyens de mouvement horizontal (4) comprennent au moins un moteur (9), une roue d'engrenage (10), un premier pignon à chaine d'entraînement (11) et un deuxième pignon à chaine d'entraînement (12) intégralement unis à un premier arbre (13) et une poulie dentée (14), une ceinture dentée (15) et une deuxième poulie dentée (16) intégralement unis à un deuxième arbre (17), tous étant adaptés de sorte que les arbres (13, 17), en conséquence de leur forme, transforment leur mouvement de rotation en un mouvement longitudinal au moyens d'écrous (18, 19) pour déplacer la structure inférieure amovible (20).
